# EUROPÄISCHE PATENTSCHRIFT

(11) **EP 1 408 255 B1**
(45) Veröffentlichungstag und Bekanntmachung des Hinweises auf die Patenterteilung: **14.12.2011**
(21) Anmeldenummer: 03019324.7
(22) Anmeldetag: 27.08.2003
(51) Int. Cl.: F16H 25/22

(54) **Wälzschraubtrieb**
Ball screw drive
Entraînement par vis à billes

(30) Priorität: 08.10.2002 DE 10246936
(43) Veröffentlichungstag der Anmeldung: 14.04.2004
(73) Patentinhaber: Schaeffler Technologies GmbH & Co. KG, 91074 Herzogenaurach (DE)
(72) Erfinder: Osterlänger, Jürgen, 91448 Emskirchen (DE); Kraus, Manfred, 91074 Herzogenaurach (DE)

(56) Entgegenhaltungen:
- EP-A- 0 893 612
- EP-A- 1 024 305
- DE-A1- 10 140 360
- JP-A- 2002 106 673
- SU-A1- 1 597 485
- US-A- 5 927 858

## Beschreibung

### Gebiet der Erfindung

Die Erfindung betrifft einen Wälzschraubtrieb mit einer Schraubenspindel, die von einer Mutter umgeben ist, wobei eine wendelförmige Gewinderille der Spindel und eine dieser entsprechende Gewinderille der Mutter einen Kanal für tragende Wälzkörper bilden, der als endlose Wälzkörperumlaufbahn ausgeführt ist, und wobei in der Umlaufbahn ein von einem elastischen Band gebildeter Käfig mit einem mindestens einseitig angeordneten umlaufenden Steg eingesetzt ist und die Wälzkörper sich in Ausnehmungen des Käfigs befinden, und wobei die Ausnehmungen des Käfigs von Trennkörpern begrenzt sind, welche mit dem Steg einstückig ausgeführt sind und sich zu der Längsachse der Spindel radial erstrecken.

### Hintergrund der Erfindung

Als Kugelgewindetriebe ausgebildete Wälzschraubtriebe werden für sensible Anwendungen benutzt, bei denen es besonders auf störungsfreie und geräuscharme Laufeigenschaften ankommt. Ein Anwendungsgebiet ist beispielsweise die elektromagnetische Lenkung von Kraftfahrzeugen.

Aus dem Dokument EP-A-0 893 612 ist ein Wälzschraubtrieb der eingangs genannten Art bekannt. Wie dort die Figur 4 der Zeichnung zeigt, erstreckt sich der einseitig angeordnete umlaufende Steg des Käfigs in radialer Richtung der Schraubenspindel von dieser fort und ragt offenbar in eine Führungsnut hinein, die in die massiv ausgeführte Mutter, von deren innerer Oberfläche ausgehend, eingearbeitet ist.

Aus dem Dokument DE 196 22 553 A1 ist ein Wälzschraubtrieb bekannt, dessen Wälzkörper im Betrieb einen ruhigen, konstanten Lauf durchführen, so dass ein Verklemmen der Wälzkörper vermieden wird. Zu diesem Zweck ist hier in der Wälzkörperumlaufbahn der von einem elastischen Band gebildete Käfig eingesetzt, in dessen Ausnehmungen die Wälzkörper angeordnet sind. Der elastische Käfig führt die Wälzkörper. Er bewirkt im Betrieb, dass alle Wälzkörper mit derselben Geschwindigkeit in den Kanälen des Wälzschraubtriebes abrollen.

### Zusammenfassung der Erfindung

Der Erfindung liegt die Aufgabe zugrunde, einen beispielsweise als Kugel-Zugkettensystem, ausgebildeten Wälzschraubtrieb anzugeben, dessen Eigenschaften verbessert sind, wobei mit diesem System bei optimiertem Wirkungsgrad durch einen möglichst stick-slip-freien Lauf der Wälzkörper und durch eine gute Schmierstoff-Speichermöglichkeit eine Verlängerung der Lebensdauer erzielt werden können soll.

Diese Aufgabe wird erfindungsgemäß dadurch gelöst, dass die Trennkörper Schmierstoff-Vorratsräume bilden und die Mutter von einer zylindrischen Hülse und in dieser eingesetzten, die Gewinderille der Mutter aufweisenden Mutternkörpern gebildet ist, wobei in einem der Mutternkörper eine umlaufende Führungsnut axial eingeformt ist, in die der Steg des Käfigs hineinragt und dort in Umfangsrichtung der Spindel geführt ist.

Der Käfig setzt sich aus einer bestimmten Anzahl von Trennkörpern für die gleiche Anzahl von Wälzkörpern zusammen, wobei die Trennkörper mit nur einem Steg oder zwei parallelen Stegen flexibel verbunden sind. Insbesondere der Käfig, der mit nur einem einseitig angeordneten umlaufenden Steg ausgeführt ist, kann durch einen dünnen Querschnitt in allen Richtungen flexibel sein, um der räumlichen Kugellaufbahn folgen zu können. Als Werkstoff für den Käfig kommt vor allem ein flexibler Kunststoff in Frage.

Die Trennkörper können jeweils vier Berührungspunkte für einen Vierpunktkontakt zu den als Kugeln ausgebildeten Wälzkörpern aufweisen, so dass eine reibungsreduzierte Anordnung vorliegt. Dabei kann jeder Trennkörper eine zentrale, einen Vorratsraum für Schmierstoff bildende Bohrung aufweisen. In der Bohrung kann sich dann ein Fettvorrat sammeln. Außerdem kann infolge der Bohrung jeweils der Abstand zweier in Umfangsrichtung der Spindel hintereinander angeordneter Kugeln optimal kleingehalten werden.

Der Trennkörper, welcher infolge der Bohrung einen Ring bildet, kann jeweils an seiner von dem Steg abgewandten Umfangsstelle einen durchgehenden Schlitz aufweisen. Ein solcher Schlitz gewährleistet eine zusätzliche Weichheit des Käfigs bei Kugelstößen.

Die Mutter ist von einer zylindrischen Hülse und in dieser eingesetzten, die Gewinderille der Mutter aufweisenden Mutternkörpern gebildet, wobei in einem der Mutternkörper eine umlaufende Führungsnut für den Steg des Käfigs axial eingeformt ist. Dabei kann das Einformen durch Spritzguss erfolgen. Der Mutternkörper kann beispielsweise aus Kunststoff oder Sintermetall hergestellt werden.

Der Käfig kann mindestens eine als Sollbruchstelle wirkende Kerbe aufweisen. Eine solche Sollbruchstelle ermöglicht es, dass der Käfig bei einer geometrisch ungleichförmigen Käfigbewegung aufgetrennt wird. Auf diese Weise ist vor allem eine vorteilhafte, vormontierte Kugelsatzmontage in einem als Kugelgewindetrieb ausgebildeten Wälzschraubtrieb möglich. Mit einzelnen, nicht verbundenen Zwischenstücken ist eine prozesssichere Montage dagegen schwierig. Die Trennfunktion wird dann von einer Druckkette und nicht von einer Zugkette übernommen. Statt nur eines Steges sind an dem Käfig auch zwei umlaufende Stege denkbar.

Die Trennkörper können auch jeweils als ebene Platten mit zwei Berührungspunkten für einen Zweipunkt-Kontakt zu den als Kugeln ausgebildeten Wälzkörpem ausgeführt sein. Auf diese Weise wird ohne mittige Bohrung der jeweiligen Platte anstatt einer Vierpunkt-Anlage zu den Kugeln ein reibungsverringerter Zweipunkt-Kontakt geschaffen.
Der Steg kann mit einer welligen Gestalt baulich flexibel ausgelegt sein. Hierdurch erhält er, außer durch seinen dünnen Querschnitt, eine zusätzliche Flexibilität.

### Kurze Beschreibung der Zeichnung

Ausführungsbeispiele der Erfindung sind in der Zeichnung dargestellt und werden im Folgenden näher beschrieben. Es zeigen:
- Figur 1: einen erfindungsgemäßen Wälzschraubtrieb in einem Längs- schnitt;
- Figur 2: eine stirnseitige Ansicht eines Wälzkörper führenden Käfigs;
- Figur 3: einen Trennkörper des Käfigs nach Figur 2 im Schnitt mit zwei anliegenden Wälzkörpern;
- Figur 4: einen Querschnitt durch einen Trennkörperbereich des Käfigs nach Figur 3;
- Figur 5: einen Querschnitt entsprechend Figur 4 mit einem abgewandelten Trennkörper;
- Figur 6: einen gegenüber Figur 3 abgewandelten Käfigbereich im Schnitt mit zwei an einem Trennkörper anliegenden Wälzkörpern;
- Figur 7: einen Querschnitt durch den Käfigbereich nach Figur 6;
- Figur 8: einen weiteren, gegenüber Figur 3 abgewandelten Käfigbereich im Schnitt mit an Trennkörpern anliegenden Wälzkörpern;
- Figur 9: einen Figur 6 entsprechenden Käfigbereich, in welchem die Ver- bindungsstege zu einem Trennkörper umlaufende Kerben aufwei- sen;
- Figur 10: einen Querschnitt durch den Käfigbereich nach Figur 9;
- Figur 11: einen Figur 8 entsprechenden Käfigbereich, in welchem ein Steg des Käfigs eine umlaufende Kerbe aufweist;
- Figur 12: einen Querschnitt durch den Käfigbereich gemäß Linie XII-XII der Figur 11.

### Ausführliche Beschreibung der Zeichnung

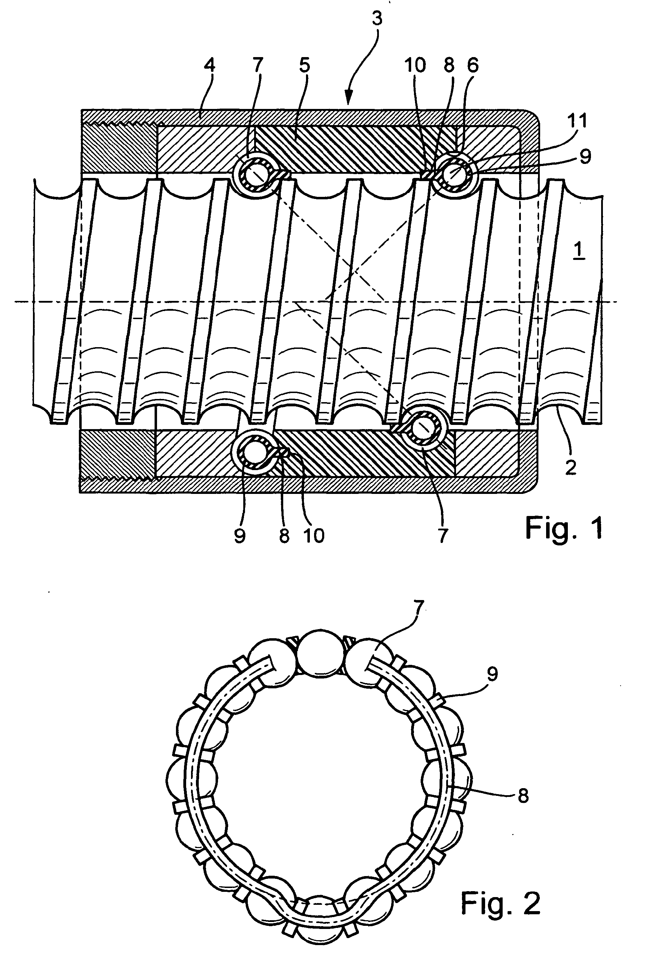

Ein in den Figuren 1 bis 4 dargestellter Wälzschraubtrieb besteht aus einer Spindel 1, in welcher Gewinderillen 2 eingearbeitet sind, und aus einer Mutter 3, welche die Spindel 1 koaxial umgibt. Die Mutter 3 ist aus einer Hülse 4 und darin angeordneten Mutternkörpern 5 zusammengesetzt. In den Mutternkörpern 5 sind Gewinderillen 6 eingearbeitet, wobei jede Gewinderille 6 gemeinsam mit einer entsprechend angeordneten Gewinderille 2 der Spindel 1 einen Umlaufkanal für eine endlose Reihe von Wälzkörpern 7 bildet, die als Kugeln ausgeführt sind.

In dem Umlaufkanal ist ein von einem elastischen Band gebildeter Käfig angeordnet, welcher die Wälzkörper 7 führt. Dieser Käfig besteht aus einem einseitig angeordneten Steg 8 und mehreren in Abständen hintereinander angeordneten Trennkörpern 9, die mit dem Steg 8 einstückig ausgeführt sind. Je zwei benachbarte Trennkörper 9 bilden einen Aufnahmeraum für einen Wälzkörper 7. In einem der Mutternkörper 5 sind umlaufende Führungsnuten 10 eingearbeitet, wobei jeweils in eine Führungsnut 10 der Steg 8 eines Käfigs hineinragt und dort in Umfangsrichtung der Spindel 1 geführt wird.

Jeder Trennkörper 9 erstreckt sich radial zur Spindel 1 und weist eine zentrale Bohrung auf, die als Vorratsraum 11 für Schmierstoff wirkt. Die Stirnseiten des Trennkörpers 9 sind entsprechend den anliegenden Wälzkörpern 7 konkav ausgeführt, wobei sich mit diesen an jedem Trennkörper 9 im Schnitt vier Berührungspunkte 12 ergeben, so daß im Betrieb des Wälzschraubtriebes die Reibung zwischen den Wälzkörpern 7 und dem Trennkörper 9 gering gehalten wird.

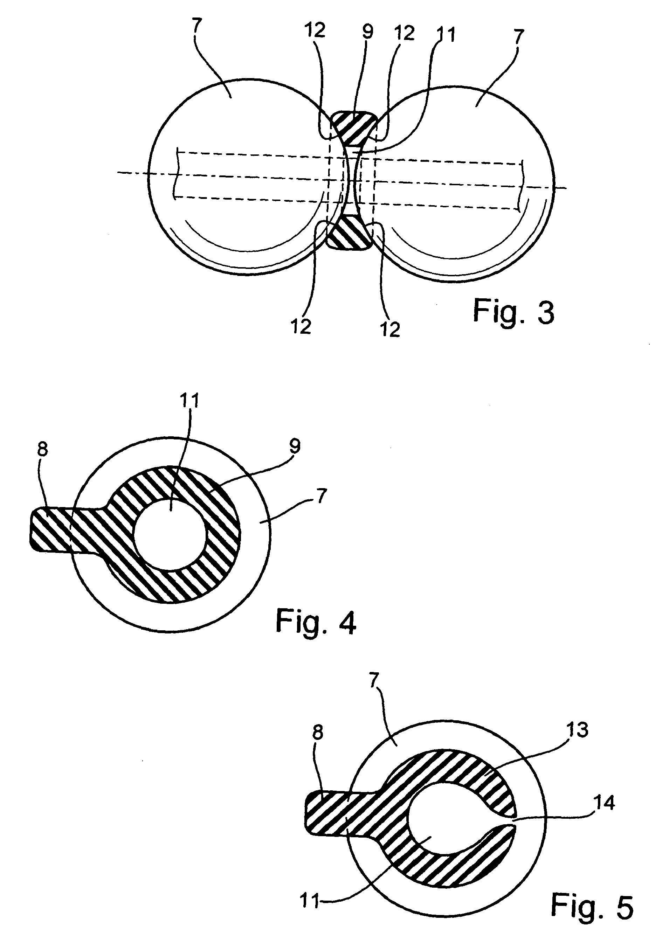

Figur 5 zeigt einen Käfig für die Wälzkörper 7, bei welchem abgewandelte Trennkörper 13 einstückig mit dem Steg 8 ausgeführt sind. Der Vorratsraum 11 ist hier durch einen durchgehenden Schlitz 14 nach außen geöffnet. Dieser befindet sich an der von dem Steg 8 abgwandten Seite des Trennkörpers 13. Danach wird die Elastizität jeweils des Trennkörpers 13 und damit des gesamten Käfigs erhöht.

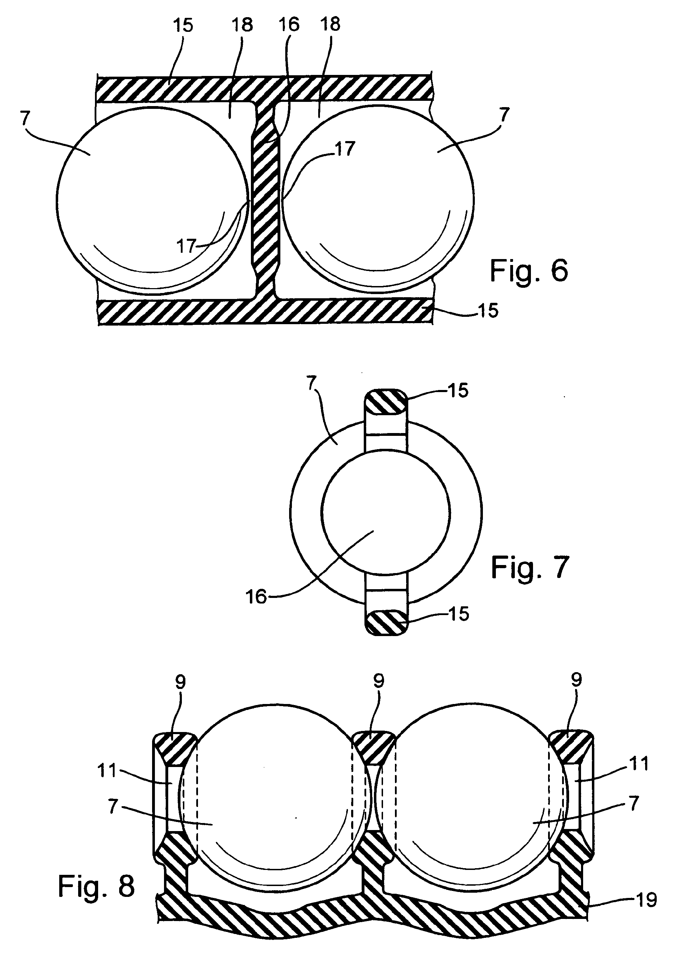

In den Figuren 6 und 7 ist der Käfig aus zwei parallelen Stegen 15 und dazwischen angeordneten plattenförmigen Trennkörpern 16 aufgebaut, so daß sich hier im Schnitt jeweils nur zwei Berührungspunkte 17 des Trennkörpers 16 mit den Wälzkörpern 7 ergeben. Hierdurch wird im Betrieb die Reibung zwischen den Wälzkörpern 7 und den Trennkörpern 16 weiter verringert. Als Vorratsraum 18 für Schmierstoff dient hier der nicht von dem Wälzkörper 7 ausgefüllte Anteil des Aufnahmeraumes zwischen zwei Trennkörpern 16.

Figur 8 zeigt einen Käfig mit Trennkörpern 9, die mit einem gewellten Steg 19 einstückig ausgeführt sind. Hier ist der Käfig infolge der welligen Gestalt des Steges 19 baulich flexibel ausgelegt.

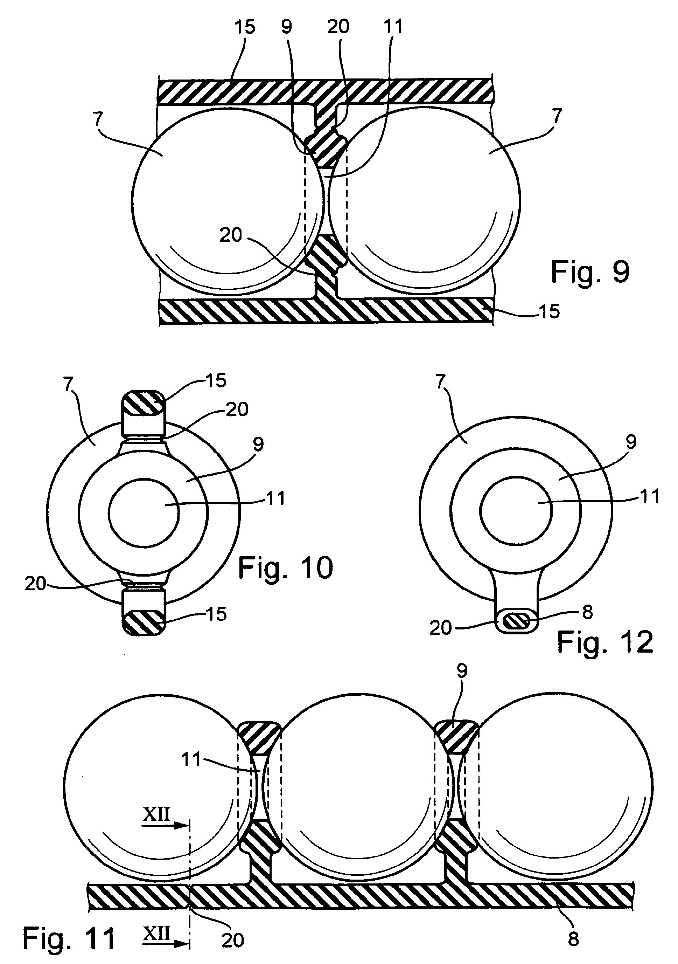

In den Figuren 9 und 10 sind die Verbindungsstege des Trennkörpers 9 zu den parallelen Stegen 15 des Käfigs jeweils mit umlaufenden Kerben 20 versehen, so daß sich hier Sollbruchstellen ergeben. Solche Kerben 20 können auch, wie die Figuren 11 und 12 zeigen, an einem Steg 8 angebracht werden.

### Bezugszahlenliste

- 1: Spindel
- 2: Gewinderille
- 3: Mutter
- 4: Hülse
- 5: Mutternkörper
- 6: Gewinderille
- 7: Wälzkörper
- 8: Steg
- 9: Trennkörper
- 10: Führungsnut
- 11: Vorratsraum
- 12: Berührungspunkt
- 13: Trennkörper
- 14: Schlitz
- 15: Steg
- 16: Trennkörper
- 17: Berührungspunkt
- 18: Vorratsraum
- 19: Steg
- 20: Kerbe

## Patentansprüche

1. Wälzschraubtrieb mit einer Schraubenspindel (1), die von einer Mutter (3) umgeben ist, wobei eine wendelförmige Gewinderille (2) der Spindel (1) und eine dieser entsprechende Gewinderille (6) der Mutter (3) einen Kanal für tragende Wälzkörper (7) bilden, der als endlose Wälzkörperumlaufbahn ausgeführt ist, und wobei in der Umlaufbahn ein von einem elastischen Band gebildeter Käfig mit einem mindestens einseitig angeordneten umlaufenden Steg (8, 15, 19) eingesetzt ist und die Wälzkörper (7) sich in Ausnehmungen des Käfigs befinden, und wobei die Ausnehmungen des Käfigs von Trennkörpern (9, 13, 16) begrenzt sind, welche mit dem Steg (8, 15, 19) einstückig ausgeführt sind und sich zu der Längsachse der Spindel (1) radial erstrecken, **dadurch gekennzeichnet, dass** die Trennkörper (9, 13, 16) Schmierstoff-Vorratsräume (11, 18) bilden und die Mutter (3) von einer zylindrischen Hülse (4) und in dieser eingesetzten, die Gewinderille (6) der Mutter (3) aufweisenden Mutternkörpern (5) gebildet ist, wobei in einem der Mutternkörper (5) eine umlaufende Führungsnut (10) axial eingeformt ist, in die der Steg des Käfigs hineinragt und dort in Umfangsrichtung der Spindel (1) geführt ist.

2. Wälzschraubtrieb nach Anspruch 1, **dadurch gekennzeichnet, dass** der Käfig aus einem flexiblen Kunststoff hergestellt ist.

3. Wälzschraubtrieb nach Anspruch 1, **dadurch gekennzeichnet, dass** die Wälzkörper (7) Kugeln sind.

4. Wälzschraubtrieb nach Anspruch 3, **dadurch gekennzeichnet, dass** die Trennkörper (9, 13) jeweils vier Berührungspunkte (12) für einen Vierpunktkontakt zu den als Kugeln ausgebildeten Wälzkörpern (7) aufweisen.

5. Wälzschraubtrieb nach Anspruch 4, **dadurch gekennzeichnet, dass** jeder Trennkörper (9, 13) eine zentrale, einen Vorratsraum (11) für Schmierstoff bildende Bohrung aufweist.

6. Wälzschraubtrieb nach Anspruch 5, **dadurch gekennzeichnet, dass** der infolge der Bohrung einen Ring bildende Trennkörper (13) an seiner von dem Steg (8) abgewandten Umfangsstelle einen durchgehenden Schlitz (14) aufweist.

7. Wälzschraubtrieb nach Anspruch 1, **dadurch gekennzeichnet, dass** der Käfig mindestens eine als Sollbruchstelle wirkende Kerbe (20) aufweist.

8. Wälzschraubtrieb nach Anspruch 3, **dadurch gekennzeichnet, dass** die Trennkörper (16) jeweils als ebene Platten mit zwei Berührungspunkten (17) für einen Zweipunktkontakt zu den als Kugeln ausgebildeten Wälzkörpern (7) ausgeführt sind.

9. Wälzschraubtrieb nach Anspruch 1, **dadurch gekennzeichnet, dass** der Steg (19) mit einer welligen Gestalt baulich flexibel ausgelegt ist.

## Claims

1. Ball screw drive having a screw spindle (1) which is surrounded by a nut (3), a helical thread groove (2) of the spindle (1) and a corresponding thread groove (6) of the nut (3) forming a channel for load-bearing rolling bodies (7), which channel is formed as an endless rolling-body circulating path, and a cage which is formed from an elastic band and has a circumferential web (8, 15, 19) which is arranged at least on one side being inserted in the circulating path, and the rolling bodies (7) being situated in recesses of the cage, and the recesses of the cage being delimited by separating bodies (9, 13, 16) which are configured in one piece with the web (8, 15, 19) and extend radially with respect to the longitudinal axis of the spindle (1), **characterized in that** the separating bodies (9, 13, 16) form lubricant supply spaces (11, 18) and the nut (3) is formed by a cylindrical sleeve (4) and nut bodies (5) which are inserted in the latter and have the thread groove (6) of the nut (3), a circumferential guide groove (10), into which the web of the cage protrudes and is guided there in the circumferential direction of the spindle (1), being formed axially in one of the nut bodies (5).

2. Ball screw drive according to Claim 1, **characterized in that** the cage is produced from a flexible plastic.

3. Ball screw drive according to Claim 1, **characterized in that** the rolling bodies (7) are balls.

4. Ball screw drive according to Claim 3, **characterized in that** the separating bodies (9, 13) in each case have four contact points (12) for four-point contact with the rolling bodies (7) which are configured as balls.

5. Ball screw drive according to Claim 4, **characterized in that** each separating body (9, 13) has a central hole which forms a supply space (11) for lubricant.

6. Ball screw drive according to Claim 5, **characterized in that** the separating body (13) which forms a ring as a result of the hole has a continuous slot (14) at a circumferential point thereof which faces away from the web (8).

7. Ball screw drive according to Claim 1, **characterized in that** the cage has at least one notch (20) which acts as predetermined break point.

8. Ball screw drive according to Claim 3, **characterized in that** the separating bodies (16) are configured in each case as flat plates with two contact points (17) for two-point contact with the rolling bodies (7) which are configured as balls.

9. Ball screw drive according to Claim 1, **characterized in that** the web (19) is of structurally flexible design with an undulating shape.

## Revendications

1. Entraînement par vis à billes, comprenant une vis (1) qui est entourée par un écrou (3), une rainure de filetage (2) de forme hélicoïdale de la vis (1) et une rainure de filetage (6) correspondante de l'écrou (3) formant un canal pour des corps de roulement porteurs (7), le canal étant réalisé sous forme de chemin de roulement périphérique sans fin pour les corps de roulement, et une cage formée par une bande élastique étant insérée dans le chemin périphérique avec une nervure (8, 15, 19) périphérique disposée au moins d'un côté, et les corps de roulement (7) se trouvant dans des évidements de la cage, les évidements de la cage étant limités par des corps de séparation (9, 13, 16) qui sont réalisés d'une seule pièce avec la nervure (8, 15, 19) et s'étendent radialement par rapport à l'axe longitudinal de la vis (1), **caractérisé en ce que** les corps de séparation (9, 13, 16) forment des espaces de réserve de lubrifiant (11, 18) et l'écrou (3) est formé par une douille cylindrique (4) et des corps d'écrou (5) insérés dans celle-ci, présentant la rainure de filetage (6) de l'écrou (3), une rainure de guidage (10) périphérique étant formée axialement dans l'un des corps d'écrou (5), dans laquelle rainure de guidage la nervure de la cage s'enfonce et est guidée dans la direction périphérique de la vis (1) .

2. Entraînement par vis à billes selon la revendication 1, **caractérisé en ce que** la cage est constituée d'un plastique flexible.

3. Entraînement par vis à billes selon la revendication 1, **caractérisé en ce que** les corps de roulement (7) sont des billes.

4. Entraînement par vis à billes selon la revendication 3, **caractérisé en ce que** les corps de séparation (9, 13) présentent à chaque fois quatre points de contact (12) pour un contact à quatre points avec les corps de roulement (7) réalisés sous forme de billes.

5. Entraînement par vis à billes selon la revendication 4, **caractérisé en ce que** chaque corps de séparation (9, 13) présente un alésage central formant un espace de réserve (11) pour du lubrifiant.

6. Entraînement par vis à billes selon la revendication 5, **caractérisé en ce que** le corps de séparation (13) formant une bague en raison de l'alésage, présente sur sa partie périphérique opposée à la nervure (8) une fente continue (14).

7. Entraînement par vis à billes selon la revendication 1, **caractérisé en ce que** la cage présente au moins une entaille (20) servant de point destiné à la rupture.

8. Entraînement par vis à billes selon la revendication 3, **caractérisé en ce que** les corps de séparation (16) sont réalisés à chaque fois sous forme de plaques planes avec deux points de contact (17) pour un contact à deux points avec les corps de roulement (7) réalisés sous forme de billes.

9. Entraînement par vis à billes selon la revendication 1, **caractérisé en ce que** la nervure (19) est conçue de manière structurellement flexible avec une forme ondulée.
